(19) Europäisches Patentamt
European Patent Office
Office européen des brevets

(11) **EP 2 466 981 B1**

(12) **FASCICULE DE BREVET EUROPEEN**

(45) Date de publication et mention de la délivrance du brevet:
**13.11.2013 Bulletin 2013/46**

(51) Int Cl.:
***H04W 72/10*** *(2009.01)*

(21) Numéro de dépôt: **11193524.3**

(22) Date de dépôt: **14.12.2011**

(54) **Procédé d'allocation de ressources dans un réseau de communication mobile et maillé avec limitation des interférences inter-cluster et système mettant en oeuvre le procédé.**

Ressourcen-Zuordnungsverfahren in einem vermaschten Mobilfunknetz mit Begrenzung der Inter-Cluster-Interferenzen, sowie System zur Umsetzung dieses Verfahrens

Method for resource allocation in a mobile meshed communication network with limitation of inter-cluster interference and system implementing the method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2010 FR 1004937**

(43) Date de publication de la demande:
**20.06.2012 Bulletin 2012/25**

(73) Titulaire: **Thales**
**92200 Neuilly Sur Seine (FR)**

(72) Inventeurs:
• **Rousseau, Stéphane**
**92704 Colombes Cedex (FR)**

• **Esmiol, Fabien**
**92704 Colombes Cedex (FR)**
• **Conan, Vania**
**92704 Colombes Cedex (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 910 655        US-A1- 2004 019 576**
**US-A1- 2005 089 045**

**Description**

La présente invention concerne le domaine des réseaux de communications mobiles et maillés, par exemple les réseaux ad-hoc mobiles. L'invention concerne également les réseaux mobiles cellulaires. De tels réseaux comportent une pluralité de noeuds interconnectés entre eux par le biais de liaisons radios. Les noeuds du réseau sont des équipements de communication radio, par exemple un terminal informatique équipé d'une liaison wifi, un téléphone portable ou tout autre dispositif de communication sans fil. Un noeud peut également désigner un véhicule mobile embarquant un dispositif de communication sans fil.

L'invention concerne plus précisément l'allocation de ressources de communication temporelles dans un réseau mobile, en particulier l'accès multiple au médium de transmission par répartition dans le temps (TDMA).

Les réseaux ad-hoc mobiles sont caractérisés par une capacité à s'organiser, sans infrastructure prédéfinie, pour assurer le transport de communications avec une qualité spécifiée et à se configurer automatiquement afin de répondre aux exigences de déploiement du système. De plus un tel réseau doit pouvoir assurer sa maintenance de manière autonome, en particulier les noeuds du réseau étant mobiles, la topologie du réseau doit pouvoir être mise à jour en permanence.

Dans un réseau ad hoc mobile, il est indispensable de concevoir et mettre en oeuvre une méthode d'accès simultané aux ressources de transmission pour éviter que les communications simultanées entre plusieurs utilisateurs ou groupes d'utilisateurs n'interfèrent entre elles.

Le problème de la suppression ou de la limitation des interférences entre utilisateurs dans un réseau mobile est crucial car il impacte directement la qualité de service que peut fournir un tel réseau.

La problématique des interférences entre utilisateurs dans un réseau sans fil est traitée de façons diverses dans l'état de l'art.

Tout d'abord on connait des solutions basées sur l'application de protocoles de transport spécifiques qui intègrent des méthodes de contrôle et de correction des erreurs liées aux interférences au prix d'une diminution du débit utile. Par exemple, des méthodes de type ARQ « Automatic Repeat Request », FEC « Forward Erroc Correcting » ou H-ARQ « Hybrid Automatic Repeat Request » sont utilisées pour lutter contre les perturbations engendrées par les interférences des communications entre utilisateurs mais elles introduisent soit des données de redondance qui impactent le débit utile soit un délai de transmission supplémentaire parfois incompatible de certaines applications temps-réel telles que la voix sur IP. A titre d'exemple, le document [1] présente une étude des protocoles de transport permettant de lutter contre le phénomène d'interférences dans un réseau sans fil.

D'autres méthodes connues sont basées sur l'utilisation de protocoles de routage, mis en oeuvre au niveau de la couche réseau, dans le but de maximiser l'exploitation des ressources du réseau sans fil. A titre d'exemple, la méthode décrite dans le document [2] se base sur une estimation des interférences générées par les communications, celle décrite dans le document [3] prend en compte une anticipation des interférences futures.

Enfin il existe des méthodes d'accès simultané aux ressources physiques du médium de transmission qui sont mises en oeuvre au niveau de la couche physique ou de la couche MAC. Ces méthodes visent à partager les ressources entre les différents utilisateurs de façon à éviter les collisions.

La méthode d'accès multiple CSMA/CA (Carrier Sense Multiple Access with Collision Avoidance) utilise un mécanisme d'esquive des collisions entre communications basé sur un principe d'accusé de réception réciproque entre l'émetteur et le récepteur. Si le réseau est encombré, la  transmission est différée. Dans le cas contraire, si le médium de transmission est disponible pendant un temps donné, la transmission est réalisée pendant ce temps. L'émetteur transmet un message contenant des informations sur le volume des données qu'il souhaite émettre et sa vitesse de transmission. Le récepteur envoie un message à l'émetteur lui signifiant que le medium est disponible pour une émission, puis l'émetteur commence à émettre ses données. Après réception de l'intégralité des données émises, le récepteur envoie un accusé de réception à l'émetteur. Tous les émetteurs voisins patientent alors pendant un temps estimé comme nécessaire à la transmission du volume d'information à émettre. La méthode d'accès CSMA/CA est notamment utilisée par les réseaux Wifi.

La méthode d'accès multiple CDMA (Code division multiple access) concerne un système de codage des transmissions, basé sur la technique de l'étalement de spectre. Plusieurs liaisons numériques peuvent utiliser la même fréquence porteuse grâce à un code d'étalement alloué à chacune. Le récepteur utilise le même code d'étalement pour démoduler le signal qu'il reçoit et extraire l'information utile. Les codes d'étalement utilisés ont une propriété d'orthogonalité qui garantit d'éviter les collisions entre communications de différents utilisateurs. Le code lui-même ne transporte aucune information utile. L'opération de désétalement en réception nécessite d'importantes capacités de calcul, donc des composants plus couteux.

La méthode d'accès multiple FDMA (Frequency division multiple access) consiste en un découpage de la bande de fréquences utile en sous-bandes de façon à attribuer une partie du spectre à chaque utilisateur. De cette manière, les collisions entre utilisateurs qui ne communiquent pas sur les mêmes fréquences, sont réduites.

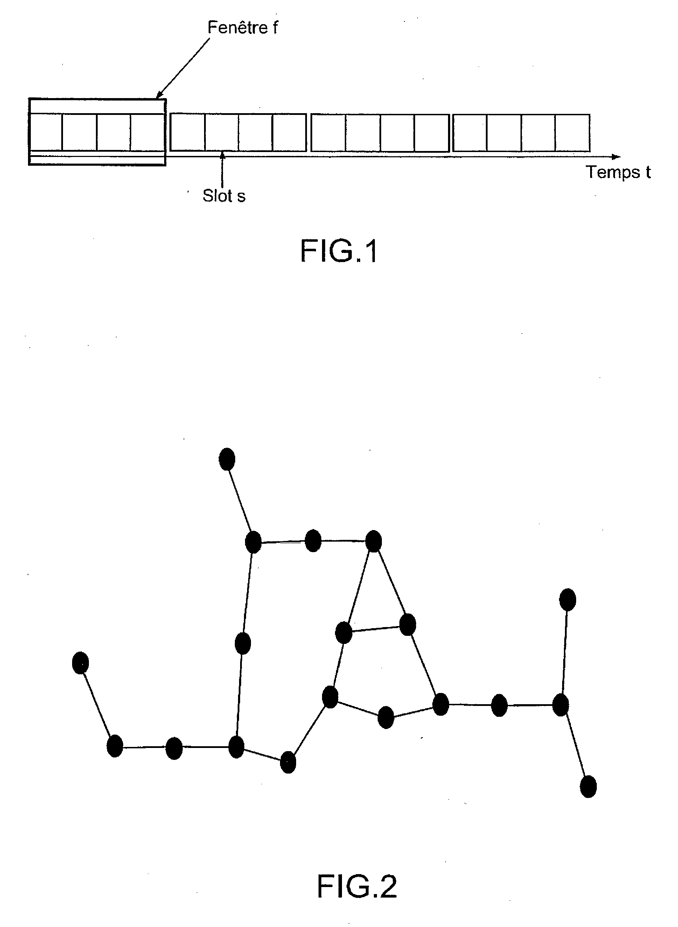

On connait enfin les méthodes d'accès multiple TDMA (Time division multiple access) basées sur une répartition temporelle des ressources et de l'accès multiple au médium de transmission. Ces méthodes mettent en oeuvre un découpage temporel en fenêtres 100 disjointes chacune de durée égale à une période T prédéterminée. Chaque fenêtre temporelle 100 est divisée en une pluralité S de tranches de temps 110 de durée T/S encore appelées slots 110. Un exemple de découpage temporel en fenêtres 100 et slots 110 est représenté à la figure 1. Lorsqu'un terminal veut communiquer avec un autre, ils conviennent entre du choix des slots 110 temporels pendant lesquels la communication va être réalisée en prenant en compte les communications effectuées par les autres terminaux environnant afin d'éviter toutes collisions avec eux. Cette méthode garantit de la qualité de service mais nécessite la synchronisation de tous les terminaux du réseau entre eux ainsi qu'une connaissance des communications faites par les autres terminaux pour faire à tout instant le bon choix d'attribution des slots temporels à chaque utilisateur. Cette méthode nécessite donc une coopération entre les terminaux pour fonctionner, ce qui peut poser problème pour des réseaux de grande taille.

Pour réaliser cette coopération sur un réseau maillé quelque soit sa taille, une méthode consiste à introduire une hiérarchie entre les terminaux. Les terminaux sont ainsi regroupés en sous-ensembles, encore appelés clusters, dans lesquels un unique terminal, appelé cluster-head, fait office de chef et a pour fonction l'ordonnancement des communications dans les slots de la fenêtre temporelle TDMA pour tous les terminaux du cluster en veillant à ce qu'il n'y ait pas de collisions entre les communications de chaque terminal. Les autres terminaux du cluster ont un lien direct avec le cluster-head, ils sont soit membres s'ils ne sont reliés qu'à des membres du cluster, soit noeuds relais s'ils ont un lien avec un terminal appartenant à un autre cluster.

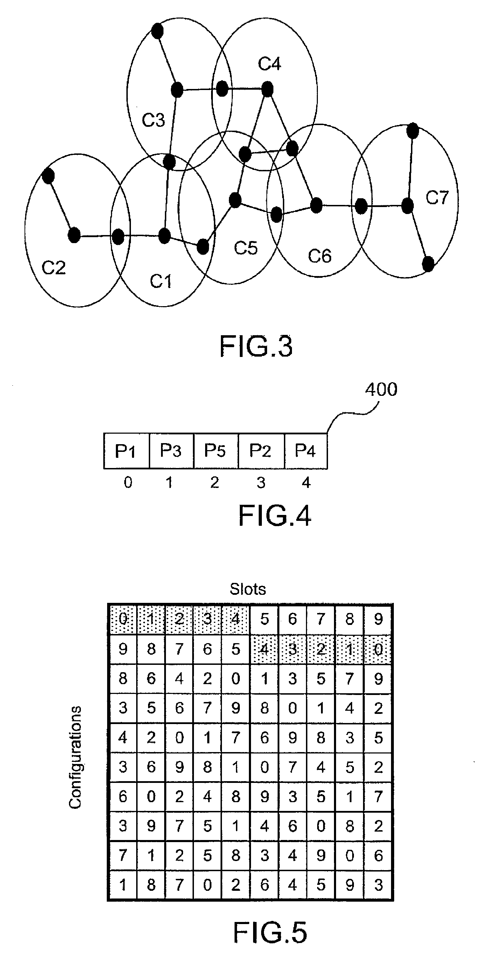

Un exemple de topologie de réseau maillé sans hiérarchie particulière est représenté à la figure 2. Le même réseau organisé en clusters est représenté à la figure 3. Chaque cluster est identifié par son terminal cluster-head, référencé par la lettre C et un numéro, et par un cercle de rayon sensiblement égal à la portée d'une liaison radio entre deux terminaux. Les terminaux situés à l'intérieur d'un cercle appartiennent au cluster i géré par le terminal cluster-head $C_i$.

Une telle organisation en clusters permet de déléguer l'allocation des ressources à certains terminaux pour un groupe de terminaux adjacents. Chaque cluster gère ses communications indépendamment des autres clusters, ce qui permet une gestion des ressources sur des réseaux à grande échelle.

Toutefois, cette gestion indépendante par clusters entraine des risques de collisions entre les communications de deux clusters adjacents. Un cluster adjacent est un cluster immédiatement voisin d'un autre. Dans l'exemple de la figure 3, les clusters C2,C3 et C5 sont adjacents au cluster C1. De même les clusters C4,C5 et C7 sont adjacents au cluster C6. Les clusters n'ayant pas connaissance des slots choisis par les autres clusters, il est possible que deux clusters soient suffisamment proches pour que les communications de l'un gênent les communications de l'autre et choisissent les mêmes slots pour leurs communications en créant ainsi des collisions entre leurs communications.

Un problème des méthodes d'accès multiple TDMA associées à une organisation du réseau maillé en clusters est donc que l'empêchement des collisions ou interférences entre clusters n'est pas garanti. Pour qu'il le soit, la méthode d'accès aux ressources doit permettre de minimiser les chances que deux ou plusieurs clusters adjacents choisissent les mêmes slots temporels pour communiquer.

Une solution à ce problème est présentée dans le document [4]. Elle se base sur la définition de super fenêtres temporelles composées d'une pluralité Nf de fenêtres temporelles TDMA. Chaque super fenêtre est affectée à un cluster différent, de façon arbitraire, avec comme unique contrainte de ne pas affecter la même super fenêtre à deux clusters adjacents. Cette solution permet d'éviter les interférences entre clusters voisins, cependant son efficacité est limitée puisqu'elle entraine un délai égal à au moins la durée d'une super fenêtre, entre deux communications. De plus le nombre Nf de fenêtres temporelles allouées à un cluster est défini en fonction d'une estimation, a priori, du nombre de clusters voisins ou adjacents. Cette méthode ne prend ainsi pas en compte l'aspect dynamique de la topologie d'un réseau mobile et ne permet pas une répartition optimale des ressources pour des clusters qui présentent un nombre inférieur à Nf de clusters adjacents.

On connait également la demande de brevet française publiée sous le numéro FR 2910 655, du même demandeur. Cette demande décrit un procédé de réservation et d'allocation de ressources de communication, dans un réseau, les ressources étant attribuées aux noeuds du réseau sous forme de créneaux temporels.

Cette solution est basée sur l'emploi de créneaux temporels et se rapproche des méthodes d'accès multiple TDMA qui présentent les inconvénients discutés ci-dessus.

La présente invention vise à remédier aux limitations précitées des méthodes d'accès multiple connues en proposant une méthode permettant de limiter, voire de supprimer, les interférences inter clusters tout en garantissant une répartition et une affectation optimale des ressources.

A cet effet, l'invention a pour objet un procédé d'allocation de ressources de communications dans un réseau maillé mobile comportant une pluralité de noeuds communiquant entre eux par l'intermédiaire de liaisons radios, lesdites ressources de communications étant constituées par au moins une fenêtre temporelle comportant au moins une pluralité de slots temporels pendant lesquels lesdits noeuds sont autorisés ou pas à communiquer, ledit réseau maillé étant structuré en une pluralité de clusters comprenant chacun au moins un noeud, ledit procédé étant caractérisé en ce qu'il comporte au moins les étapes suivantes :

○ une étape de génération d'un tableau de configurations comportant chacune un indice de priorité d'allocation différent pour chaque slot temporel de ladite fenêtre temporelle, lesdits indices variant de 0 à n-1, n étant un nombre entier strictement positif égal au nombre de slots temporels,

○ une étape d'affectation d'une configuration, parmi l'ensemble de configurations généré, à chaque cluster de façon à ce qu'un nombre $N_p$ prédéterminé, strictement positif, d'indices de priorité ne soient pas affectés aux mêmes slots pour les clusters qui sont adjacents entre eux,

○ une étape d'allocation des slots temporels aux communications intra cluster dans l'ordre des priorités définies dans la configuration affectée audit cluster, l'indice de priorité associé à un slot étant par exemple croissant avec l'ordre d'attribution d'un slot à une nouvelle communication, un nouveau slot n'étant attribué que si tous les slots dont l'indice de priorité est inférieur sont déjà alloués à une communication.

Dans une variante de réalisation de l'invention, la génération du tableau de configurations est réalisée au moins à l'aide des étapes suivantes :

○ une étape d'initialisation des indices de priorité de la première configuration à des valeurs données,
○ pour chaque configuration d'indice c variant de 2 au nombre de configurations total $N_c$,

■ une étape de génération d'une séquence $MIN_c$ comportant n valeurs associées aux n slots temporels, la valeur $MIN_c(s)$ de la séquence $MIN_c$ associée à un slot d'indice s dans la fenêtre temporelle est prise égale à l'indice minimum parmi les indices de priorité dudit slot d'indice s dans toutes les configurations précédemment générées,
■ une étape de génération d'une séquence $SUM_c$, comportant n valeurs associées aux n slots temporels, la valeur $SUM_c(s)$ de la séquence $SUM_c$ associée à un slot d'indice s dans la fenêtre temporelle est prise égale à la somme des indices de priorité dudit slot d'indice s pour toutes les configurations précédemment générées,
■ une étape de séparation des indices de priorité entre indices de priorité obligatoire et indices de priorité optionnelle, les indices de priorité obligatoire étant strictement inférieurs au ratio n/c, les indices de priorité optionnelle étant supérieurs au ratio n/c,
■ une étape d'affectation de la priorité obligatoire d'indice p au slot temporel d'indice s pour lequel la séquence $MIN_c$ présente une valeur maximale, si plusieurs slots respectent cette condition, alors la priorité obligatoire d'indice p est affectée au slot pour lequel la séquence $SUM_c$ présente une valeur maximale,
■ une étape d'affectation de la priorité optionnelle d'indice p au slot temporel d'indice s pour lequel la séquence $SUM_c$ présente une valeur maximale, si plusieurs slots respectent cette condition, alors la priorité optionnelle d'indice p est affectée au slot pour lequel la séquence $MIN_c$ présente une valeur maximale.

Dans une autre variante de réalisation de l'invention, la génération d'un tableau de configurations différent est réalisé pour chaque groupe (G1,G2) de clusters ne comprenant que des clusters adjacents entre eux, l'étape d'initialisation étant réalisée à partir de la configuration allouée à un cluster dudit groupe appartenant également à un autre groupe ou à partir d'une configuration arbitraire lorsqu'aucun des clusters membre dudit groupe n'est également membre d'un autre groupe.

Dans une autre variante de réalisation de l'invention, à chaque cluster est affecté la configuration d'indice c minimum dans le tableau de configurations qui n'est pas déjà affectée à un autre cluster.

Dans une autre variante de réalisation de l'invention, au sein d'un cluster, les communications sont interdites sur les slots associés à un indice de priorité supérieur à un seuil prédéterminé.

Dans une autre variante de réalisation de l'invention, dans chaque cluster, un noeud exécute la fonction de chef de cluster, l'étape d'allocation des slots temporels aux communications intra cluster en fonction de leur indice de priorité étant exécutée par ce noeud.

Dans une autre variante de réalisation de l'invention, l'étape d'affectation des configurations à chaque cluster est réalisée par des moyens distribués comprenant au moins la diffusion, par chaque cluster, de son indice de configuration à ses clusters adjacents.

Dans une autre variante de réalisation de l'invention, ledit réseau est un réseau cellulaire et le noeud chef de cluster est une station de base.

Dans une autre variante de réalisation de l'invention, la fenêtre temporelle est une fenêtre TDMA.

Dans un aspect particulier de l'invention, le procédé selon l'invention est mis en oeuvre par les couches MAC et/ou réseau de la pile protocolaire de chaque noeud.

L'invention a également pour objet un système de communication embarqué sur un noeud (Ci) mobile communiquant au sein d'un réseau ad-hoc mobile caractérisé en ce qu'il comporte des moyens adaptés à mettre en oeuvre le procédé selon l'invention.

L'invention a également pour objet un réseau ad hoc comportant une pluralité de noeuds (Ci) mobile communiquant entre eux caractérisé en ce que chacun desdits noeuds (Ci) comporte un système de communication embarqué selon l'invention.

D'autres caractéristiques et avantages de l'invention apparaîtront à l'aide de la description qui suit faite en regard de dessins annexés qui représentent :

- la figure 1, une illustration d'un découpage temporel selon une méthode d'accès simultané aux ressources TDMA,
- la figure 2, un exemple de topologie de réseau maillé sans hiérarchie particulière,
- la figure 3, l'exemple de la figure 2 avec une organisation du réseau par clusters,
- la figure 4, un exemple, selon l'invention, d'affectation de priorités aux slots d'une fenêtre temporelle,
- la figure 5, un exemple de tableau de configurations généré selon l'invention,
- la figure 6, un exemple d'allocation de configurations à chaque cluster d'un groupe de deux clusters adjacents,
- la figure 7, un exemple d'allocation de configurations à chaque cluster d'un groupe de trois clusters adjacents,
- la figure 8, un exemple d'allocation de configurations à chaque cluster d'un groupe de quatre clusters adjacents,
- la figure 9, un organigramme des étapes de mise en oeuvre du procédé selon l'invention aboutissant à la génération d'un ensemble de configurations,
- la figure 10, un exemple, dans une variante de réalisation de l'invention, d'allocation de configurations à chaque cluster comportant un premier groupe de trois clusters adjacents et un second groupe de deux clusters adjacents,
- la figure 11, une illustration du découpage temporel d'une fenêtre TDMA,

Afin d'éviter les collisions entre communications résultant de clusters adjacents, le procédé selon l'invention consiste, dans un premier temps, à affecter une priorité d'utilisation à chaque slot d'une fenêtre temporelle. La figure 4 illustre ce principe. Il y est représenté une fenêtre temporelle 400 découpée en slots. A chaque slot est associé un chiffre différent variant de 0 à N-1, N étant le nombre de slots dans une fenêtre temporelle. La priorité d'utilisation d'un slot est d'autant plus élevée que le chiffre associé est petit. Le chiffre définissant la priorité d'un slot sera par la suite désigné indice de priorité. L'ensemble des priorités associées aux slots d'une fenêtre temporelle est appelé configuration. Lorsqu'un accès aux ressources de communication est demandé par un noeud d'un cluster au noeud chef du cluster, ce dernier alloue, pour cette communication, le slot temporel non utilisé qui présente la priorité la plus élevée identifiée par l'indice de priorité le plus petit. Dans l'exemple de la figure 4, la première communication sera allouée au slot temporel d'indice de priorité 0, le slot d'indice de priorité 4 étant alloué uniquement lorsque les quatre autres slots temporels sont déjà affectés à une communication. Dans une variante de réalisation de l'invention, si l'indice de priorité d'un slot est supérieur à un seuil donné, le noeud chef du cluster peut interdire la communication sur ce slot.

Pour éviter les interférences inter clusters, le même slot temporel ne doit pas être affecté simultanément aux communications émanant de deux clusters adjacents. Afin de respecter cette contrainte, le procédé selon l'invention vise notamment à affecter, pour le même slot, une priorité différente à chaque cluster d'un ensemble de clusters adjacents. De cette façon, le nombre de configurations générées est égal au nombre de slots d'une fenêtre temporelle.

La figure 5 représente l'ensemble des configurations générées par le procédé selon l'invention pour une fenêtre temporelle comprenant 10 slots. Cet exemple est donné à titre illustratif et n'est pas représentatif de l'ordre de grandeur du nombre de slots par fenêtre temporelle qui est, dans la pratique, de l'ordre d'une centaine. Chaque configuration (représentée en ordonnée) présente une valeur de priorité différente pour le même slot temporel (représenté en abscisse). De cette façon, chaque cluster, qui organise les communications en son sein selon une configuration donnée, est le seul à avoir la priorité la plus élevée sur un slot temporel. Dans la pratique, il suffit qu'un cluster ait la priorité la plus forte sur un nombre de slots égal à $N_p = \dfrac{n}{1 + n_{adj}}$, où $n_{adj}$

est le nombre de clusters qui lui sont adjacents. La génération des configurations selon l'invention permet de satisfaire cette condition jusqu'à un nombre de clusters adjacents égal au nombre de slots temporels d'une fenêtre ce qui est largement suffisant en pratique.

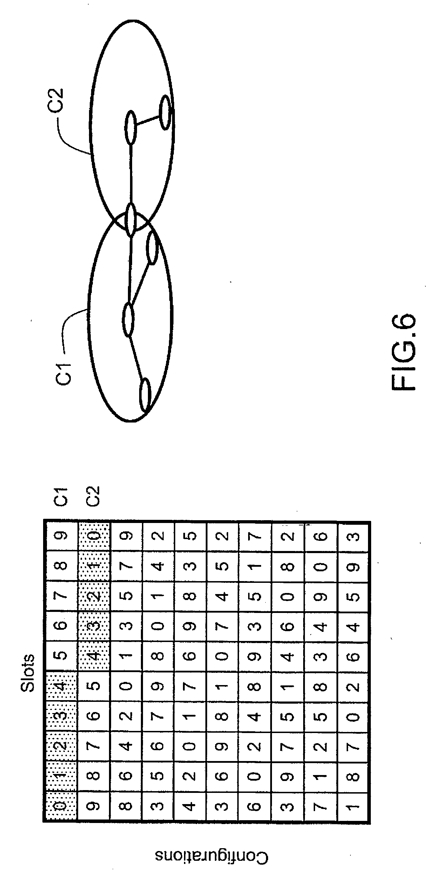

Une fois le tableau de l'ensemble des configurations généré, une configuration est affectée à chaque cluster. Plusieurs exemples de l'affectation de configurations sont maintenant illustrés à l'appui des figures 6,7 et 8 en reprenant l'exemple de tableau de configuration de la figure 5, défini pour dix slots temporels.

La figure 6 illustre un exemple d'allocations de configurations à chaque cluster d'un groupe de deux clusters adjacents C1 et C2. La première configuration du tableau de l'ensemble des configurations possibles est affectée au cluster C1. La deuxième configuration est affectée au cluster C2. Ainsi, chaque cluster possède la priorité la plus élevée sur la moitié des slots de la fenêtre temporelle, soit cinq slots au total.

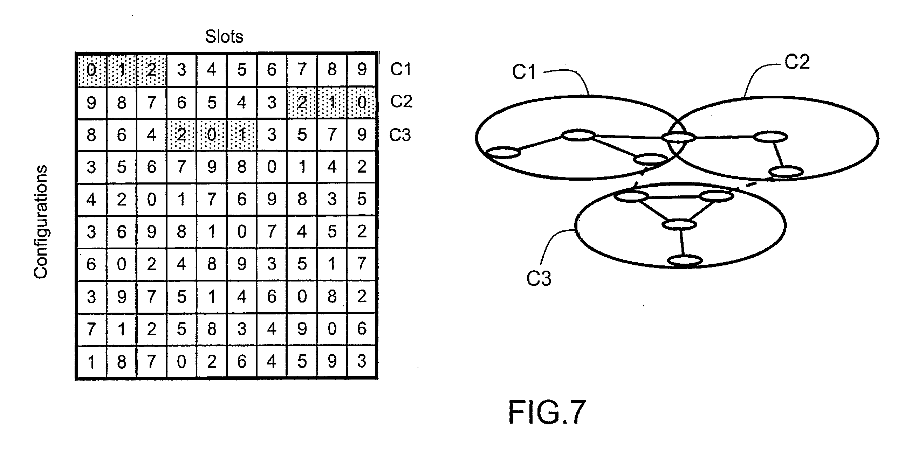

La figure 7 illustre un exemple d'allocations de configurations à chaque cluster d'un groupe de trois clusters adjacents C1, C2 et C3. La première configuration du tableau de l'ensemble des configurations possibles est affectée au cluster C1. La deuxième configuration est affectée au cluster C2. La troisième configuration est affectée au cluster C3. Ainsi, chaque cluster possède la priorité la plus élevée sur un tiers des slots de la fenêtre temporelle, soit trois slots au total.

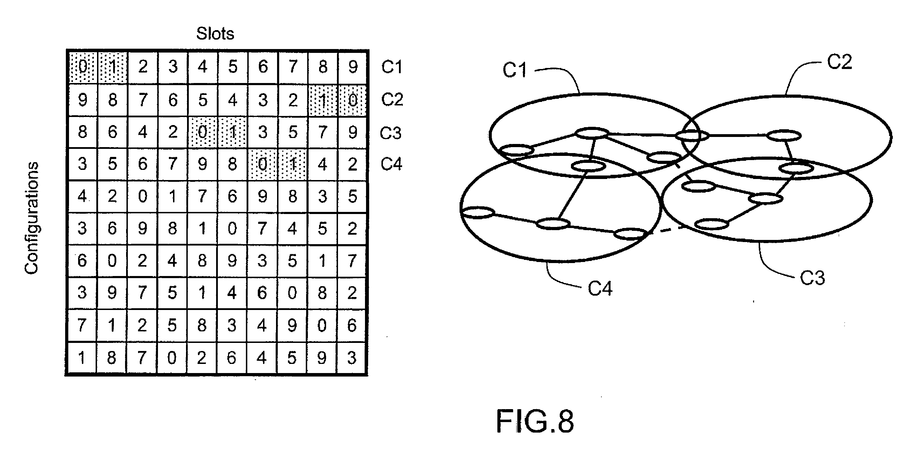

La figure 8 illustre un exemple d'allocations de configurations à chaque cluster d'un groupe de quatre clusters adjacents C1, C2, C3 et C4. La première configuration du tableau de l'ensemble des configurations possibles est affectée au cluster C1. La deuxième configuration est affectée au cluster C2. La troisième configuration est affectée au cluster C3. La quatrième configuration est affectée au cluster C4. Ainsi, chaque cluster possède la priorité la plus élevée sur un quart des slots de la fenêtre temporelle, soit deux slots au total.

On décrit à présent le procédé, selon l'invention, mis en oeuvre pour générer, de façon automatique, l'ensemble des configurations possibles. Ce procédé est exécuté par chaque noeud chef de cluster (cluster-head).

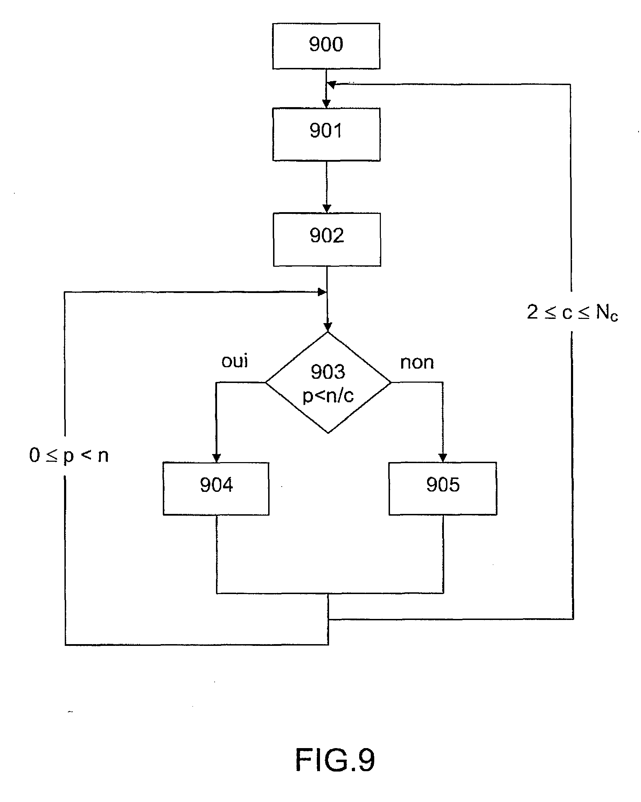

La figure 9 schématise, sous forme d'un organigramme les étapes de mise en oeuvre de la génération de l'ensemble des configurations selon l'invention.

La première configuration 900 est définie arbitrairement, par exemple ses indices de priorité sont affectés aux slots temporels dans leur ordre croissant d'apparition dans le temps.

Pour chaque configuration d'indice c variant de 2 au nombre de configurations total $N_c$, qui est au plus égal au nombre n de slots temporels dans une fenêtre, on détermine, dans une première étape 901, une séquence $MIN_c$ qui comporte n valeurs associées aux n slots temporels. Pour un slot temporel donné d'indice s, la valeur correspondante de la séquence $MIN_c(s)$ est prise égale à l'indice minimum parmi les indices de priorité de ce slot dans toutes les configurations précédemment générées.

Dans une deuxième étape 902, une séquence $SUM_c$, comportant également un nombre de valeurs n égal au nombre de slots temporels, est déterminée. Pour un slot temporel donné d'indice s, la valeur correspondante de la séquence $SUM_c(s)$ est prise égale à la somme des indices de priorité de ce slot pour toutes les configurations précédemment générées.

La configuration d'indice c est ensuite définie à l'aide des étapes 903 à 906. La génération d'une configuration consiste à associer chaque indice de priorité p variant de 0 à n-1 à un slot temporel.

Dans une étape de test 903 les indices de priorité sont séparés en deux groupes. Pour cela, l'indice de priorité courant p est comparé au ratio n/c. Si p est inférieur à n/c alors la priorité associée à cet indice est appelée priorité obligatoire, dans le cas contraire elle est appelée priorité optionnelle. Le ratio n/c correspond au nombre de slots minimum pour lesquels chaque cluster d'un groupe de clusters adjacents doit avoir la priorité la plus élevée et ce dans l'objectif d'éliminer l'interférence inter-clusters. Dans une variante de réalisation de l'invention, le noeud chef de cluster peut interdire la communication sur les slots temporels bénéficiant d'une priorité optionnelle afin de n'utiliser que les slots temporels associés à une priorité obligatoire qui garantit l'absence totale de collisions entre communications de plusieurs clusters adjacents.

Si p est l'indice d'une priorité obligatoire, il doit être affecté à un slot temporel qui n'a pas déjà bénéficié d'une autre priorité obligatoire dans une configuration précédente. Dans une étape 904, la priorité obligatoire d'indice p est affectée au slot temporel d'indice s pour lequel la séquence $MIN_c$ déterminée à l'étape 901 présente une valeur maximale. Si plusieurs slots respectent cette condition, alors la priorité obligatoire d'indice p est affectée à celui pour lequel la valeur de la séquence $SUM_c$ est maximale.

Si p est l'indice d'une priorité optionnelle, il doit être affecté à un slot temporel qui n'a pas déjà bénéficié de la même priorité dans une configuration précédente. Dans une étape 905, la priorité optionnelle d'indice p est affectée au slot temporel d'indice s pour lequel la séquence $SUM_c$ déterminée à l'étape 902 présente une valeur maximale. Si plusieurs slots respectent cette condition, alors la priorité optionnelle d'indice p est affectée à celui pour lequel la valeur de la séquence $MIN_c$ est maximale.

Une fois le tableau de l'ensemble des configurations possibles généré, il faut attribuer une configuration particulière à chaque cluster pour lui permettre d'organiser ses communications en minimisant le risque de collisions avec ses clusters voisins. On décrit à présent un mode de réalisation de l'invention qui concerne la mise en oeuvre, de façon distribuée, de l'attribution d'une configuration à chaque cluster. Sans sortir du cadre de l'invention, le procédé décrit s'applique également à un réseau ad-hoc qui n'est pas structuré sous forme de clusters, les configurations étant dans ce cas attribuées directement à chaque noeud du réseau qui accède aux ressources temporelles de communication en fonction des priorités définies dans la configuration qui lui est attribuée. Ce cas de figure s'applique notamment aux réseaux de petite taille, comportant un faible nombre de noeuds et qui ne nécessitent pas une hiérarchisation particulière. Il s'applique également aux réseaux de taille plus grande non organisés en clusters. L'invention s'applique également, de façon similaire, à un réseau cellulaire dans lequel plusieurs noeuds mobiles sont structurés en cellules autour d'une station de base fixe. Les configurations sont attribuées aux stations de bases qui jouent un rôle similaire à celui du noeud chef cluster-head.

Le procédé selon l'invention, dans un premier mode de réalisation particulier, est maintenant décrit pour l'exemple particulier d'un réseau organisé en clusters. La formation des clusters peut s'effectuer à l'aide de méthodes connues dites de clustérisation, par exemple la méthode basée sur l'algorithme « Low_Id » qui attribue la fonction de cluster-head aux noeuds du réseau présentant les identifiants les plus petits. La formation des clusters peut être faite en fonction de différentes caractéristiques topologiques. En particulier, un cluster peut être défini par la distance en nombre de sauts entre le cluster-head et les membres du cluster ou encore par le type de noeud relai entre deux clusters. Un noeud relai peut appartenir à plusieurs clusters, la communication entre ces clusters transitant toujours par lui ou au contraire les clusters peuvent être définis de façon à être tous disjoints les uns des autres et dans ce cas la communication intra clusters se fait au moyen de deux noeuds chacun membres de deux clusters voisins et qui réalisent la fonction de noeuds relais.

Chaque noeud cluster-head exécute un procédé distribué selon l'invention permettant de lui attribuer une configuration.

A cet effet, chaque noeud du réseau mémorise au moins les informations suivantes : son identifiant unique au sein du réseau qui lui est attribué dès la formation du réseau, l'identifiant du noeud cluster-head du cluster auquel il appartient, l'état de ce noeud, à savoir s'il s'agit d'un noeud cluster-head, d'un noeud relais ou d'un simple noeud membre. Chaque noeud mémorise également la configuration dans laquelle se trouve le cluster auquel il appartient, le nombre de clusters dans le réseau, le nombre et la liste des clusters adjacents à son cluster qui contient notamment l'identifiant du noeud cluster-head et la configuration de chaque cluster adjacent.

Chaque noeud cluster-head crée et diffuse dans le réseau, à un intervalle de temps donné, un message d'information, sous forme de paquet de données, spécifique qui comporte notamment les informations suivantes : l'identifiant du noeud cluster-head à l'origine du message, la configuration choisie par ce noeud cluster-head et le nombre de sauts parcourus par le message.

Le message d'information créé par le noeud cluster-head est diffusé à tous les noeuds du réseau qui sont à sa portée directe. A la réception du message, les noeuds exécutent les étapes suivantes. Si le noeud récepteur est un simple noeud membre, le message est détruit. Si le noeud récepteur est un noeud relais, le message est diffusé à tous les noeuds qui sont à sa portée directe. Si le noeud récepteur est un noeud cluster-head alors il met à jour la liste des clusters qui lui sont adjacents avec les configurations qu'ils utilisent et choisi une configuration, parmi celles générées par le procédé selon l'invention, qui n'a pas déjà été choisie par un cluster adjacent. Chaque noeud cluster-head a ainsi la connaissance des configurations choisies par les clusters adjacents, il choisit, par exemple, la configuration du tableau immédiatement disponible, c'est-à-dire qui n'a pas encore été affectée à un cluster, dans l'ordre descendant des lignes du tableau.

Le procédé distribué permettant d'attribuer une configuration à chaque cluster tel que décrit ci-dessus n'est qu'un exemple de mise en oeuvre de l'invention. Tout procédé, algorithme ou méthode permettant d'attribuer une configuration à chaque cluster de façon à ce que qu'un cluster n'utilise pas la même configuration qu'un de ces clusters adjacents est envisageable. Un tel procédé doit être exécuté au moins par chaque noeud cluster-head et doit être basé sur l'échange d'informations, de façon distribuée, entre les noeuds et les clusters du réseau de façon à coordonner l'attribution des configurations et permettre ainsi une allocation de ressources optimales pour chaque cluster.

On décrit à présent un deuxième mode de réalisation de l'invention pour l'affectation des configurations générées selon la méthode décrite à l'appui de la figure 9 aux clusters du réseau de façon à augmenter encore l'utilisation des ressources temporelles tout en limitant les collisions entre clusters adjacents.

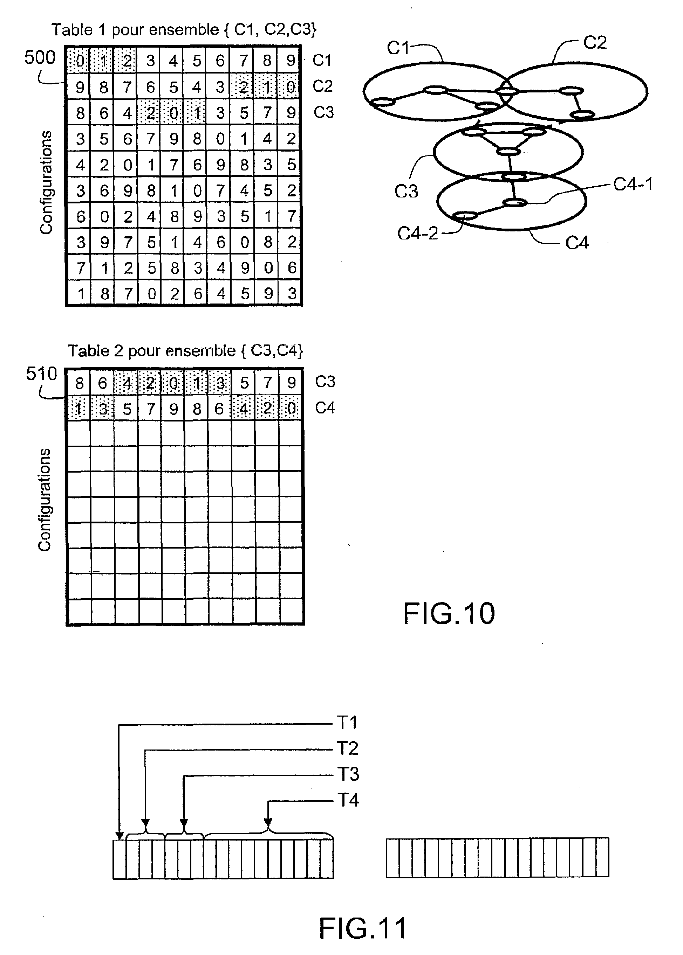

La figure 10 schématise, sur sa partie droite, un autre exemple de topologie de réseau maillé organisé en clusters. Les clusters C1, C2 et C3 forment un premier groupe de clusters adjacents entre eux. L'allocation des configurations à ces trois clusters se fait de la façon décrite à l'appui de la figure 7. Un quatrième cluster C4 est formé lors de l'entrée dans le réseau de deux noeuds C4-1 et C4-2. Le cluster C4 est uniquement adjacent au cluster C3. Pour exploiter au maximum les ressources de communication sans engendrer de collisions entre les communications des clusters C3 et C4, il suffit que le cluster C4 ait une priorité d'allocation supérieure au cluster C3 sur la moitié des slots de la fenêtre. Or la configuration allouée à C3 est déjà attribuée sur la base de l'adjacence avec C1 et C2. C3 utilise la configuration d'indice c= 3 dans le tableau 500 initialement généré. Le cluster C4 n'ayant qu'un seul voisin, la première configuration disponible dans le tableau 500 est celle d'indice c= 1 (première ligne du tableau). Or l'utilisation de cette configuration ne garantie pas au cluster C4 de bénéficier de la priorité la plus élevée, par rapport au cluster C3, sur la moitié des slots, mais seulement sur un tiers, conformément à la méthode utilisée pour générer le tableau 500.

Dans un mode de réalisation particulier de l'invention, un tableau de configuration unique est généré pour chaque groupe de clusters adjacents. Un tel groupe ne comporte que des clusters qui sont adjacents à tous les autres clusters de ce même groupe. Dans l'exemple de la figure 10, un premier groupe G1 de clusters adjacents est défini par l'ensemble de clusters {C1,C2,C3} et un second groupe G2 est défini par l'ensemble de clusters {C3,C4}. Le groupe G1 utilise le tableau 500 généré avec la configuration initiale {0,1,2,3,4,5,6,7,8,9} choisie arbitrairement. Le groupe G2 utilise un tableau 510 généré à l'aide de la même méthode décrite à l'appui de la figure 9 mais initialisé avec la configuration déjà allouée à C3. La configuration allouée à C4 est la première disponible dans le tableau 510 qui est affecté à son groupe G2 de clusters adjacents. Il s'agit donc de la deuxième configuration du tableau 510. Ainsi, le cluster C4 bénéficie bien de la priorité la plus élevée, par rapport au cluster C3, sur la moitié des slots de la fenêtre et non seulement sur un tiers.

La génération d'un tableau de configurations propre à chaque groupe de clusters adjacents nécessite la mise en oeuvre des échanges d'information suivants au sein du réseau. Chaque noeud cluster-head doit avoir, en plus de la connaissance de l'identifiant de son cluster, celle de l'identifiant du ou des groupes de clusters adjacents G1, G2 auquel le cluster qu'il représente appartient. Un même cluster peut appartenir à plusieurs clusters adjacents comme illustré dans l'exemple de la figure 10.

Les noeuds cluster-head de chaque cluster doivent communiquer, par exemple par le biais de messages d'information spécifiques, aux autres noeuds cluster-head du ou des groupes de clusters adjacents auxquels ils appartiennent l'identifiant de configuration qu'ils ont choisi (en pratique l'identifiant est le numéro de la ligne du tableau de configuration généré) et l'identifiant du groupe de clusters adjacents auquel ils appartiennent. Chaque noeud cluster-head mémorise ainsi la liste des configurations choisies par les clusters qui lui sont adjacents. Si un cluster fait partie de plusieurs groupes de clusters adjacents, par exemple le cluster C3 dans l'exemple de la figure 10, alors il choisi sa configuration en fonction de la table de configuration partagée par un des groupes, par exemple le groupe G1, en prenant la configuration immédiatement disponible dans cette table. Il transmet ensuite à l'autre groupe de clusters adjacents, le groupe G2 dans l'exemple de la figure 10, la configuration qu'il a choisi avec un indice de configuration égal à 1. Les autres clusters du groupe G2 n'ayant pas encore choisi de configuration, la configuration du cluster C3 est bien la première allouée dans le groupe G2 et porte ainsi, dans ce groupe, l'indice numéro 1.

Les noeuds ayant la fonction de relais entre deux clusters adjacents transmettent le ou les messages d'information spécifiques vers les clusters adjacents en fonction de l'identifiant d'appartenance à un groupe de clusters adjacents compris dans ces messages.

Sur réception d'un message d'information, un noeud cluster-head effectue les opérations suivantes. Si ledit message contient un indice de configuration égal à 1 et la configuration elle-même, le noeud cluster-head exécute le procédé de génération d'une nouvelle table de configuration, décrit à l'appui de la figure 9, en initialisant le procédé avec la configuration contenue dans le message. Le noeud cluster-head choisi ensuite l'indice de configuration immédiatement disponible dans l'ordre des configurations de cette nouvelle table. Cet indice est éventuellement mis à jour si en parallèle un autre cluster du même groupe a déjà préempté la même configuration. Si au contraire le message contient un indice de configuration différent de 1, alors le noeud cluster-head utilise la table de configuration en mémoire, met à jour la liste des configurations utilisées par ses voisins, au sein du même groupe, et choisi la configuration suivante disponible dans cette table.

Sans sortir du cadre de l'invention, le procédé d'allocation de configuration à chaque cluster peut être réalisé selon l'un ou l'autre alternativement des modes de réalisation décrits appliqués à l'ensemble des noeuds du réseau ou selon toute autre variante non décrite explicitement qui permette d'allouer à chaque cluster la priorité la plus élevée, par rapport à ses clusters adjacents, sur un nombre prédéterminé $N_p$ de slots.

Dès qu'une configuration définitive est attribuée à un cluster, le noeud cluster-head peut organiser l'attribution des ressources au sein du cluster en fonction des priorités définies dans la configuration. L'accès au médium de communication se fait, comme indiqué précédemment, par une méthode TDMA. Les slots temporels sur lesquels les noeuds sont autorisés ou non à communiquer sont inclus dans une fenêtre temporelle appelée fenêtre TDMA. Une fenêtre TDMA se compose typiquement de quatre parties distinctes tel que représenté sur la figure 11. Dans la première partie T1, un signal permettant la synchronisation de tous les membres du cluster avec son cluster-head est envoyé. La seconde partie T2 sert au calcul de l'ordonnancement des requêtes émises précédemment par les membres du cluster, c'est-à-dire quels slots seront utilisés par chaque terminal. Dans la troisième partie T3, les membres du cluster envoient leurs nouvelles requêtes concernant leurs besoins en ressources. Enfin, la dernière partie T4 est composée des slots temporels qui seront effectivement utilisés par les terminaux pour transmettre leurs données en accord avec l'ordonnancement effectué précédemment par le cluster-head.

Chaque cluster dispose de ce type de fenêtre. Les configurations générées selon l'invention s'appliquent à la dernière partie de la fenêtre qui concerne les slots utilisés pour la transmission de données. Les configurations donneront un ordre de priorité à respecter parmi ces slots.

Le procédé selon l'invention est exécuté par chaque noeud du réseau, ou lorsque le noeud est organisé en clusters, par chaque noeud ayant la fonction de cluster head. Plus précisément, il peut être mis en oeuvre par les couches MAC et/ou réseau de la pile protocolaire exécutée par chaque noeud.

## **Références**

[1] Subramanian, V.; Ramakrishnan, K.K.; Kalyanaraman, S.; , "Experimental study of link and transport protocols in interference-prone wireless LAN environments," Communication Systems and Net-works and Workshops, 2009. COMSNETS 2009. First International , vol., no., pp.1-10, 5-10 Jan. 2009

[2] Lucian Popa and Afshin Rostamizadeh and Richard M. Karp and Christos Papadimitriou, traffic load in wireless networks with curveball routing, In: Proc. ACM MOBIHOC, 2007

[3] Raffaele Bruno, Vania Conan, Stéphane Rousseau, "A load dependent metric for balancing Internet traffic in Wireless Mesh Networks". In Proc. of 3rd IEEE International Workshop on Enabling Technologies and Standards for Wireless Mesh Networking (Mesh Tech), Macau, October 2009.

[4] Pandey, A.; Jae Sung Lim; , "CTB-MAC: Cluster-Based TDMA Broadcast MAC Protocol for Mobile Ad-Hoc Network," Future Information Technology (FutureTech), 2010 5th International Conference on , vol., no., pp.1-6, 21-23 May 2010.

**Revendications**

1. Procédé d'allocation de ressources de communications dans un réseau maillé mobile comportant une pluralité de noeuds communiquant entre eux par l'intermédiaire de liaisons radios, lesdites ressources de communications étant constituées par au moins une fenêtre temporelle comportant au moins une pluralité de slots temporels pendant lesquels lesdits noeuds sont autorisés ou pas à communiquer, ledit réseau maillé étant structuré en une pluralité de clusters (Ci) comprenant chacun au moins un noeud, ledit procédé étant **caractérisé en ce qu'**il comporte au moins les étapes suivantes :

   ○ une étape de génération d'un tableau (500) de configurations comportant chacune un indice de priorité d'allocation différent pour chaque slot temporel de ladite fenêtre temporelle, lesdits indices variant de 0 à n-1, n étant un nombre entier strictement positif égal au nombre de slots temporels,
   ○ une étape d'affectation d'une configuration, parmi l'ensemble de configurations généré, à chaque cluster de façon à ce qu'un nombre $N_p$ prédéterminé, strictement positif, d'indices de priorité ne soient pas affectés aux mêmes slots pour les clusters qui sont adjacents entre eux,
   ○ une étape d'allocation des slots temporels aux communications intra cluster dans l'ordre des priorités définies dans la configuration affectée audit cluster,

2. Procédé d'allocation de ressources selon l'une des revendications précédentes **caractérisé en ce que** la génération du tableau (500) de configurations est réalisée au moins à l'aide des étapes suivantes :

   ○ une étape d'initialisation (900) des indices de priorité de la première configuration à des valeurs données,
   ○ pour chaque configuration d'indice c variant de 2 au nombre de configurations total $N_c$,

      ■ une étape (901) de génération d'une séquence $MIN_c$ comportant n valeurs associées aux n slots temporels, la valeur $MIN_c$(s) de la séquence $MIN_c$ associée à un slot d'indice s dans la fenêtre temporelle est prise égale à l'indice minimum parmi les indices de priorité dudit slot d'indice s dans toutes les configurations précédemment générées,
      ■ une étape (902) de génération d'une séquence $SUM_c$, comportant n valeurs associées aux n slots temporels, la valeur $SUM_c$(s) de la séquence $SUM_c$ associée à un slot d'indice s dans la fenêtre temporelle est prise égale à la somme des indices de priorité dudit slot d'indice s pour toutes les configurations précédemment générées,
      ■ une étape (903) de séparation des indices de priorité entre indices de priorité obligatoire et indices de priorité optionnelle, les indices de priorité obligatoire étant strictement inférieurs au ratio n/c, les indices de priorité optionnelle étant supérieurs au ratio n/c,
      ■ une étape (904) d'affectation de la priorité obligatoire d'indice p au slot temporel d'indice s pour lequel la séquence $MIN_c$ présente une valeur maximale, si plusieurs slots respectent cette condition, alors la priorité obligatoire d'indice p est affectée au slot pour lequel la séquence $SUM_c$ présente une valeur maximale,
      ■ une étape (905) d'affectation de la priorité optionnelle d'indice p au slot temporel d'indice s pour lequel la séquence $SUM_c$ présente une valeur maximale, si plusieurs slots respectent cette condition, alors la priorité optionnelle d'indice p est affectée au slot pour lequel la séquence $MIN_c$ présente une valeur maximale.

3. Procédé d'allocation de ressources selon la revendication 2 **caractérisé en ce que** la génération d'un tableau (500,510) de configurations différent est réalisé pour chaque groupe (G1,G2) de clusters ne comprenant que des clusters adjacents entre eux, l'étape d'initialisation (900) étant réalisée à partir de la configuration allouée à un cluster dudit groupe appartenant également à un autre groupe ou à partir d'une configuration arbitraire lorsqu'aucun des clusters membre dudit groupe n'est également membre d'un autre groupe.

4. Procédé d'allocation de ressources selon l'une des revendications 2 ou 3 **caractérisé en ce qu'**à chaque cluster est affectée la configuration d'indice c minimum dans le tableau de configurations qui n'est pas déjà affectée à un autre cluster.

5. Procédé d'allocation de ressources selon l'une des revendications précédentes **caractérisé en ce que**, au sein d'un cluster, les communications sont interdites sur les slots associés à un indice de priorité supérieur à un seuil prédéterminé.

6. Procédé d'allocation de ressources selon l'une des revendications précédentes **caractérisé en ce que** dans chaque cluster, un noeud exécute la fonction de chef de cluster, l'étape d'allocation des slots temporels aux communications intra cluster en fonction de leur indice de priorité étant exécutée par ce noeud.

7. Procédé d'allocation de ressources selon l'une des revendications précédentes **caractérisé en ce que** l'étape d'affectation des configurations à chaque cluster est réalisé par des moyens distribués comprenant au moins la diffusion, par chaque cluster, de son indice de configuration à ses clusters adjacents.

8. Procédé d'allocation de ressources selon l'une des revendications précédentes **caractérisé en ce que** ledit réseau est un réseau cellulaire et le noeud chef de cluster est une station de base.

9. Procédé d'allocation de ressources selon l'une des revendications précédentes **caractérisé en ce que** la fenêtre temporelle est une fenêtre TDMA.

10. Procédé d'allocation de ressources selon l'une des revendications précédentes **caractérisé en ce qu'**il est mis en oeuvre par les couches MAC et/ou réseau de la pile protocolaire de chaque noeud.

11. Système de communication destiné à être embarqué sur un noeud (Ci) mobile communiquant au sein d'un réseau ad-hoc mobile **caractérisé en ce que** le dit système comporte des moyens adaptés à mettre en oeuvre le procédé selon l'une des revendications 1 à 10.

12. Réseau ad hoc comportant une pluralité de noeuds (Ci) mobile communiquant entre eux **caractérisé en ce que** chacun desdits noeuds (Ci) comporte un système de communication embarqué selon la revendication 11.

**Patentansprüche**

1. Verfahren zum Zuordnen von Kommunikationsressourcen in einem vermaschten Mobilfunknetz, das mehrere Knoten umfasst, die mittels Funkverbindungen miteinander kommunizieren, wobei die Kommunikationsressourcen durch wenigstens ein Zeitfenster gebildet werden, das wenigstens eine Mehrzahl von Zeitschlitzen umfasst, während derer die Knoten zum Kommunizieren autorisiert sein können oder nicht, wobei das vermaschte Netz in mehrere Cluster (Ci) strukturiert ist, die jeweils wenigstens einen Knoten umfassen, wobei das Verfahren **dadurch gekennzeichnet ist, dass** es wenigstens die folgenden Schritte beinhaltet:

○ einen Schritt des Erzeugens einer Tabelle (500) von Konfigurationen, die jeweils einen anderen Zuordnungsprioritätsindex für jeden Zeitschlitz des Zeitfensters umfassen, wobei die Indexe von 0 bis n-1 variieren, wobei n eine strikt positive ganze Zahl von gleich der Anzahl von Zeitschlitzen ist;
○ einen Schritt des Zuweisens einer Konfiguration aus allen erzeugten Konfigurationen zu jedem Cluster, so dass eine strikt positive vorbestimmte Anzahl $N_p$ von Prioritätsindexen nicht denselben Schlitzen für die Cluster zugeordnet werden, die nebeneinander liegen;
○ einen Schritt des Zuordnens von Zeitschlitzen zu den Intra-Cluster-Kommunikationen in der Reihenfolge der Prioritäten, die in der dem Cluster zugewiesenen Konfiguration definiert sind.

2. Verfahren zum Zuordnen von Ressourcen nach dem vorherigen Anspruch, **dadurch gekennzeichnet, dass** die Erzeugung der Tabelle (500) von Konfigurationen wenigstens mittels der folgenden Schritte erfolgt:

○ einen Schritt (900) des Initialisierens von Prioritätsindexen der ersten Konfiguration bei gegebenen Werten;
○ für jede Indexkonfiguration c, die von 2 bis zur Gesamtzahl von Konfigurationen $N_c$ variiert,

■ einen Schritt (901) des Erzeugens einer Sequenz $MIN_c$, die n mit den n Zeitschlitzen assoziierte Werte umfasst, wobei der Wert $MIN_c(s)$ der mit einem Indexschlitz s in dem Zeitfenster assoziierten Sequenz $MIN_c$ als gleich dem Mindestindex unter den Prioritätsindexen des Indexschlitzes s in allen zuvor erzeugten Konfigurationen genommen wird;
■ einen Schritt (902) des Erzeugens einer Sequenz $SUM_c$, die n mit den n Zeitschlitzen assoziierte Werte umfasst, wobei der Wert $SUM_c(s)$ der Sequenz $SUM_c$, die mit einem Indexschlitz s in dem Zeitfenster assoziiert ist, als gleich der Summe der Prioritätsindexe des Indexschlitzes s für alle zuvor erzeugten Konfigurationen genommen wird;
■ einen Schritt (903) des Trennens von Prioritätsindexen zwischen obligatorischen Prioritätsindexen und fakultativen Prioritätsindexen, wobei die obligatorischen Prioritätsindexe strikt niedriger sind als das Verhältnis n/c, wobei die fakultativen Prioritätsindexe höher sind als das Verhältnis n/c;
■ einen Schritt (904) des Zuweisens des obligatorischen Prioritätsindexes p zum Indexzeitschlitz s, für den die Sequenz $MIN_c$ einen Maximalwert hat, wenn mehrere Schlitze diese Bedingung erfüllen, dann wird der obligatorische Prioritätsindex p dem Schlitz zugewiesen, für den die Sequenz $SUM_c$ einen Maximalwert hat;
■ einen Schritt (905) des Zuweisens des fakultativen Prioritätsindexes p zum Indexzeitschlitz s, für den die Sequenz $SUM_c$ einen Maximalwert hat, wenn mehrere Schlitze diese Bedingung erfüllen, dann wird der fakultative Prioritätsindex p dem Schlitz zugewiesen, für den die Sequenz $SUM_c$ einen Maximalwert hat.

3. Verfahren zum Zuordnen von Ressourcen nach Anspruch 2, **dadurch gekennzeichnet, dass** die Erzeugung einer anderen Tabelle (500, 510) von Konfigurationen für jede Gruppe (G1, G2) von Clustern realisiert wird, die nur nebeneinander liegende Cluster enthalten, wobei der Schritt (900) des Initialisierens auf der Basis der Konfiguration realisiert wird, die einem Cluster der Gruppe zugeordnet ist, die auch zu einer anderen Gruppe gehört, oder auf der Basis einer willkürlichen Konfiguration, wenn keines der Cluster, die zu der Gruppe gehören, auch zu einer anderen Gruppe gehören.

4. Verfahren zum Zuordnen von Ressourcen nach einem der Ansprüche 2 oder 3, **dadurch gekennzeichnet**, das jedem Cluster die Mindestindexkonfiguration c in der Konfigurationstabelle zugeordnet wird, die nicht bereits einem anderen Cluster zugewiesen ist.

5. Verfahren zum Zuordnen von Ressourcen nach einem der vorherigen Ansprüche, **dadurch gekennzeichnet, dass** innerhalb eines Clusters Kommunikationen auf den Schlitzen untersagt sind, die mit einem Prioritätsindex assoziiert sind, der höher ist als eine vorbestimmte Schwelle.

6. Verfahren zum Zuordnen von Ressourcen nach einem der vorherigen Ansprüche, **dadurch gekennzeichnet, dass** in jedem Cluster ein Knoten die Funktion eines Hauptclusters ausführt, wobei der Schritt des Zuordnens von Zeitschlitzen zu den Intra-Cluster-Kommunikationen in Abhängigkeit von ihrem Prioritätsindex von diesem Knoten ausgeführt wird.

7. Verfahren zum Zuordnen von Ressourcen nach einem der vorherigen Ansprüche, **dadurch gekennzeichnet, dass** der Schritt des Zuweisens der Konfigurationen zu jedem Cluster durch verteilte Mittel durchgeführt wird, die wenigstens die Verteilung, durch jedes Cluster, ihres Konfigurationsindexes zu ihren benachbarten Clustern umfasst.

8. Verfahren zum Zuordnen von Ressourcen nach einem der vorherigen Ansprüche, **dadurch gekennzeichnet, dass** das Netzwerk ein zelluläres Netzwerk ist und der Hauptcluster-Knoten eine Basisstation ist.

9. Verfahren zum Zuordnen von Ressourcen nach einem der vorherigen Ansprüche, **dadurch gekennzeichnet, dass** das Zeitfenster ein TDMA-Fenster ist.

10. Verfahren zum Zuordnen von Ressourcen nach einem der vorherigen Ansprüche, **dadurch gekennzeichnet, dass** es von den MAC-Schichten und/oder dem Netzwerk des Protokollstapels jedes Knotens implementiert wird.

11. Kommunikationssystem, das so ausgelegt ist, dass es an Bord eines Mobilknotens (Ci) platziert wird, der in einem mobilen Ad-hoc-Netz kommuniziert, **dadurch gekennzeichnet, dass** das System Mittel zum Implementieren des Verfahrens nach einem der Ansprüche 1 bis 10 umfasst.

12. Ad-hoc-Netz, das mehrere miteinander kommunizierende mobile Knoten (Ci) umfasst, **dadurch gekennzeichnet, dass** jeder der Knoten (Ci) ein Bordkommunikationssystem nach Anspruch 11 umfasst.

## Claims

1. A method for allocating communication resources in a meshed mobile network comprising a plurality of nodes communicating with each other by means of radio links, said communication resources being constituted by at least one time window comprising at least a plurality of time slots during which said nodes may or may not be authorised to communicate, said meshed network being structured into a plurality of clusters (Ci) each comprising at least one node, said method being **characterised in that** it comprises at least the following steps:

  ○ a step of generating a table (500) of configurations each comprising a different allocation priority index for each time slot of said time window, said indices varying from 0 to n-1, with n being a strictly positive whole number equal to the number of time slots;
  ○ a step of assigning a configuration, from among all of the generated configurations, to each cluster so that a strictly positive predetermined number $N_p$ of priority indices is not assigned to the same slots for the clusters that are adjacent to each other;
  ○ a step of allocating time slots to the intra-cluster communications in the order of priorities defined in the configuration assigned to said cluster.

2. The method for allocating resources according to the preceding claim, **characterised in that** the generation of the table (500) of configurations is carried out at least by means of the following steps:

○ a step (900) of initialising priority indices of the first configuration at given values;
○ for each index configuration c varying from 2 to the total number of configurations $N_c$,

■ a step (901) of generating a sequence $MIN_c$ comprising n values associated with the n time slots, the value $MIN_c(s)$ of the sequence $MIN_c$ associated with an index slot s in the time window being taken as equal to the minimum index from among the priority indices of said index slot s in all of the previously generated configurations;
■ a step (902) of generating a sequence $SUM_c$ comprising n values associated with the n time slots, the value $SUM_c(s)$ of the sequence $SUM_c$ associated with an index slot s in the time window being taken as equal to the sum of the priority indices of said index slot s for all of the previously generated configurations;
■ a step (903) of separating priority indices between compulsory priority indices and optional priority indices, the compulsory priority indices being strictly lower than the ratio n/c, the optional priority indices being higher than the ratio n/c;
■ a step (904) of assigning the compulsory priority index p to the index time slot s for which the sequence $MIN_c$ has a maximum value, if several slots meet this condition, then the compulsory priority index p is assigned to the slot for which the sequence $SUM_c$ has a maximum value;
■ a step (905) of assigning the optional priority index p to the index time slot s for which the sequence $SUM_c$ has a maximum value, if several slots meet this condition, then the optional priority index p is assigned to the slot for which the sequence $SUM_c$ has a maximum value.

3. The method for allocating resources according to claim 2, **characterised in that** the generation of a different table (500, 510) of configurations is realised for each group (G1, G2) of clusters that only include clusters adjacent to each other, the step (900) of initialising being realised on the basis of the configuration allocated to a cluster of said group that also belongs to another group, or on the basis of an arbitrary configuration when none of the clusters that are a member of said group are also a member of another group.

4. The method for allocating resources according to any of claims 2 or 3, **characterised in that** each cluster is assigned the minimum index configuration c in the table of configurations that is not already assigned to another cluster.

5. The method for allocating resources according to any one of the preceding claims, **characterised in that**, within a cluster, communication is prohibited on the slots associated with a priority index that is higher than a predetermined threshold.

6. The method for allocating resources according to any one of the preceding claims, **characterised in that** in each cluster a node executes the function of head cluster, the step of allocating time slots to the intra-cluster communications as a function of their priority index being executed by said node.

7. The method for allocating resources according to any one of the preceding claims, **characterised in that** the step of assigning the configurations to each cluster is carried out by distributed means comprising at least the distribution, by each cluster, of its configurations index to its adjacent clusters.

8. The method for allocating resources according to any one of the preceding claims, **characterised in that** said network is a cellular network and the head cluster node is a base station.

9. The method for allocating resources according to any one of the preceding claims, **characterised in that** the time window is a TDMA window.

10. The method for allocating resources according to any one of the preceding claims, **characterised in that** it is implemented by the MAC layers and/or network of the protocol stack of each node.

11. A communication system designed to be placed on board a mobile node (Ci) communicating within a mobile ad-hoc network, **characterised in that** said system comprises means designed to implement the method according to any one of claims 1 to 10.

12. An ad-hoc network comprising a plurality of mobile nodes (Ci) communicating with each other, **characterised in that** each of said nodes (Ci) comprises an on-board communication system according to claim 11.

Fenêtre f

Slot s

Temps t

# FIG.1

# FIG.2

## FIG.3

**FIG.3**

400

| P1 | P3 | P5 | P2 | P4 |
|----|----|----|----|----|
| 0 | 1 | 2 | 3 | 4 |

**FIG.4**

Slots

| 0 | 1 | 2 | 3 | 4 | 5 | 6 | 7 | 8 | 9 |
|---|---|---|---|---|---|---|---|---|---|
| 9 | 8 | 7 | 6 | 5 | 4 | 3 | 2 | 1 | 0 |
| 8 | 6 | 4 | 2 | 0 | 1 | 3 | 5 | 7 | 9 |
| 3 | 5 | 6 | 7 | 9 | 8 | 0 | 1 | 4 | 2 |
| 4 | 2 | 0 | 1 | 7 | 6 | 9 | 8 | 3 | 5 |
| 3 | 6 | 9 | 8 | 1 | 0 | 7 | 4 | 5 | 2 |
| 6 | 0 | 2 | 4 | 8 | 9 | 3 | 5 | 1 | 7 |
| 3 | 9 | 7 | 5 | 1 | 4 | 6 | 0 | 8 | 2 |
| 7 | 1 | 2 | 5 | 8 | 3 | 4 | 9 | 0 | 6 |
| 1 | 8 | 7 | 0 | 2 | 6 | 4 | 5 | 9 | 3 |

Configurations

**FIG.5**

EP 2 466 981 B1

FIG.6

EP 2 466 981 B1

Slots

| | 0 | 1 | 2 | 3 | 4 | 5 | 6 | 7 | 8 | 9 | |
|---|---|---|---|---|---|---|---|---|---|---|---|
| | 0 | 1 | 2 | 3 | 4 | 5 | 6 | 7 | 8 | 9 | C1 |
| | 9 | 8 | 7 | 6 | 5 | 4 | 3 | 2 | 1 | 0 | C2 |
| | 8 | 6 | 4 | 2 | 0 | 1 | 3 | 5 | 7 | 9 | C3 |
| | 3 | 5 | 6 | 7 | 9 | 8 | 0 | 1 | 4 | 2 | |
| | 4 | 2 | 0 | 1 | 7 | 6 | 9 | 8 | 3 | 5 | |
| | 3 | 6 | 9 | 8 | 1 | 0 | 7 | 4 | 5 | 2 | |
| | 6 | 0 | 2 | 4 | 8 | 9 | 3 | 5 | 1 | 7 | |
| | 3 | 9 | 7 | 5 | 1 | 4 | 6 | 0 | 8 | 2 | |
| | 7 | 1 | 2 | 5 | 8 | 3 | 4 | 9 | 0 | 6 | |
| | 1 | 8 | 7 | 0 | 2 | 6 | 4 | 5 | 9 | 3 | |

Configurations

C1    C2

C3

FIG.7

FIG.8

EP 2 466 981 B1

FIG.9

Table 1 pour ensemble { C1, C2,C3}

Table 2 pour ensemble { C3,C4}

FIG.10

FIG.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2910655

**Littérature non-brevet citée dans la description**

- **SUBRAMANIAN, V. ; RAMAKRISHNAN, K.K. ; KALYANARAMAN, S.;.** Experimental study of link and transport protocols in interference-prone wireless LAN environments. *Communication Systems and Net-works and Workshops, 2009. COMSNETS 2009. First International,* 05 Janvier 2009, 1-10
- **LUCIAN POPA ; AFSHIN ROSTAMIZADEH ; RICHARD M. KARP ; CHRISTOS PAPADIMITRIOU.** traffic load in wireless networks with curveball routing. *Proc. ACM MOBIHOC,* 2007
- **RAFFAELE BRUNO ; VANIA CONAN ; STÉPHANE ROUSSEAU.** A load dependent metric for balancing Inter-net traffic in Wireless Mesh Networks. *Proc. of 3rd IEEE International Workshop on Enabling Tech-nologies and Standards for Wireless Mesh Networking,* Octobre 2009
- **PANDEY, A. ; JAE SUNG LIM.** CTB-MAC: Cluster-Based TDMA Broadcast MAC Protocol for Mobile Ad-Hoc Network. *Future Information Technology (FutureTech), 2010 5th International Conference,* 21 Mai 2010, 1-6